# FASCICULE DE BREVET EUROPEEN

(11) **EP 2 174 828 B1**
(45) Date de publication et mention de la délivrance du brevet: **14.03.2012**
(21) Numéro de dépôt: 09172563.0
(22) Date de dépôt: 08.10.2009
(51) Int. Cl.: B60N 2/07, B60N 2/16, B60N 2/18

(54) **Siège pour véhicule automobile**
Kraftfahrzeugsitz
Seat for an automotive vehicle

(30) Priorité: 08.10.2008 FR 0805556
(43) Date de publication de la demande: 14.04.2010
(73) Titulaire: GRUPO ANTOLIN-INGENIERIA, S.A., 09080 Burgos (ES)
(72) Inventeur: Duchateau, Jean, 43330 Pont Salomon (FR); Aumond, Jean Claude, 42600 Montbrison (FR); Faye, Patrick, 42210 Montrond Les Bains (FR)
(74) Mandataire: Delorme, Nicolas

(56) Documents cités:
- FR-A- 818 343
- US-A- 2 088 784
- US-A- 2 133 325
- US-A- 2 679 889
- US-A- 2 964 093
- US-A1- 2006 290 186

## Description

La présente invention concerne un siège pour véhicule automobile.

Dans le domaine automobile, la réduction des couts revêt une importance considérable et tous les organes d'un véhicule sont concernés sans que, pour autant, leurs fonctionnalités ne doivent être dégradées.

Les sièges, qui sont des organes complexes et qui comprennent un grand nombre de composants, sont inclus dans cette réflexion visant à diminuer le coût de fabrication d'au moins certaines catégories de véhicules.

Dans une optique de réduction de coût, il peut être envisagé de limiter le nombre de composants ; ceci peut se traduire par la disparition de certaines fonctionnalités comme, par exemple, le réglage en hauteur du siège et/ou le réglage angulaire du dossier par rapport à l'assise.

L'objectif de diminution de coût des sièges automobiles ne doit cependant pas se faire au détriment des impératifs ergonomiques auxquels les sièges doivent répondre.

Il importe que le conducteur et les éventuels passagers soient assis de manière confortable et ce quelle que soit leur morphologie. Cela implique notamment que le siège offre plusieurs positions permettant à la plus grande partie de la population de trouver une position correspondant à sa morphologie.

Dans ce contexte technique, un but de l'invention est de proposer un siège pour véhicule automobile qui soit d'un faible coût de fabrication et qui puisse s'adapter à des occupants de sensiblement toute morphologie.

Les documents US 2 088 784 et US 2 133 325 décrivent un siège conforme au préambule de la revendication 1, muni de galets roulant sur une surface de guidage d'un support fixé au châssis du véhicule. La surface de guidage est curviligne et ascendante de l'arrière vers l'avant, si bien que l'assise du siège peut être déplacée entre une position extrême avant haute et une position extrême arrière basse. Simultanément, le dossier est déplacé entre une position avant droite et une position arrière inclinée.

Or, on constate que, avec ce type de siège, les personnes de grande taille ne sont pas installées de façon satisfaisante. En effet, dans la position arrière de l'assise qui est adaptée à ces personnes, le dossier est trop incliné vers l'arrière si bien que le conducteur se trouve exagérément couché. Ceci peut poser des problèmes en termes de confort mais également de sécurité.

L'invention vise à remédier à ce problème.

A cet effet, et dans sa définition générale, l'invention concerne un siège pour véhicule automobile tel que défini par la revendication 1.

Le siège selon l'invention est ainsi un siège qui est dépourvu de moyens spécifiquement dédiés au seul réglage de la hauteur de l'assise. Le siège selon l'invention s'exonère donc de moyens de réglage de position complexes et coûteux de type grains dentés etc. La perte de cette fonction est cependant compensée par une disposition originale qui prévoit de placer l'assise sur un support ayant une surface curviligne et ascendante en direction de l'avant du véhicule, permettant un déplacement suave du siège. Ainsi, en positionnant le siège à l'avant du support, l'assise se trouve en position haute avec des angles de posture adaptés à un occupant de petite taille ; à l'inverse en positionnant le siège en arrière du support, l'assise se trouve en position basse avec des angles de posture adaptés à un occupant de grande taille. L'invention permet ainsi de modifier la hauteur de l'assise et de maintenir la position du centre de pivotement entre le torse et des cuisses (point H) dans une zone normalisée et ce quelle que soit la morphologie de l'occupant (pour au moins 90% de la population).

De plus, grâce à la disposition particulière de la portion arrière de la surface de guidage, lorsque le siège est en position arrière, la partie arrière du siège est relevée, donc le dossier est moins incliné. L'invention permet donc d'améliorer la position d'une personne de grande taille, sans surcoût excessif.

Par « globalement ascendante », on entend que la surface de guidage s'étend généralement vers l'avant et vers le haut même si, en partie arrière, elle peut présenter des zones localement descendantes.

Par exemple, les portions avant et arrière s'étendent chacune sur environ la moitié de la longueur totale de la surface de guidage.

Les caractéristiques complémentaires énumérées ci-après font l'objet des revendications dépendantes.

Typiquement, les moyens de déplacement - avant et arrière - comprennent au moins un galet d'axe transversal, apte à rouler sur ladite surface de guidage.

Le dossier peut posséder une position angulaire fixe par rapport à l'assise. Avec cette configuration, le siège est encore plus simplifié puisqu'il est également dépourvu de moyens de réglage de la position angulaire du dossier par rapport à l'assise. Cette simplification n'est toutefois pas obtenue au détriment du confort puisque la forme curviligne de la surface de guidage permet, lorsque le siège est déplacé vers l'avant, et outre le relèvement de l'assise, d'obtenir un redressement du dossier, et donc une adaptation naturelle aux personnes de plus petite taille.

Toutefois, selon une autre réalisation possible, il peut être prévu que le dossier puisse s'incliner par rapport à l'assise, ce degré de liberté offrant à l'occupant une plus grande finesse de réglage.

De façon concrète, la portion avant de la surface de guidage peut présenter sensiblement la forme d'une portion de cercle de rayon moyen R1, de préférence convexe. D'autres formes curvilignes peuvent également convenir, dans la mesure où elles permettent d'obtenir un réglage du siège convenant à la morphologie de la plupart de la population.

La portion arrière de la surface de guidage peut présenter sensiblement la forme d'une portion de cercle de rayon moyen R2. Selon différentes réalisations possibles, on peut avoir R2 = R1 ou R2 différent de R1, par exemple R2 > R1.

Selon un mode de réalisation, la portion arrière de la surface de guidage est convexe et R2 > R1.

Selon un autre mode de réalisation, la portion arrière de la surface de guidage est concave, la portion arrière et la portion avant étant sensiblement tangentes. La surface de guidage comporte donc un point d'inflexion, par exemple situé sensiblement en son milieu dans la direction longitudinale. En particulier, on peut avoir une portion arrière sensiblement en forme de cercle de rayon moyen R2 et une portion avant sensiblement en forme de cercle de rayon moyen R1.

Selon encore un autre mode de réalisation, la portion arrière de la surface de guidage est sensiblement plane et tangente à la portion avant de la surface de guidage.

Il peut par ailleurs être prévu que le siège comprenne des moyens de verrouillage de l'assise sur le support.

Ces moyens de verrouillage peuvent comprendre d'une part une pluralité d'orifices ménagés dans le support, en différentes positions longitudinales, et d'autre part au moins un doigt monté sur l'assise, pouvant occuper une position de verrouillage dans laquelle il est engagé dans l'un des orifices du support, et pouvant être déplacé vers une position de déverrouillage.

Dans une forme de réalisation, le ou les doigts font saillie d'un organe pivotant qui est monté sur l'assise et possède un axe de pivotement sensiblement longitudinal, le doigt s'étendant sensiblement perpendiculairement à l'axe de pivotement, l'organe étant apte à pivoter entre une position déverrouillée dans laquelle le doigt est sensiblement vertical et, après une rotation d'environ 90° en direction du support, une position verrouillée, dans laquelle le doigt est sensiblement horizontal et engagé dans un orifice, les orifices présentant une forme allongée dans la direction verticale pour permettre le pivotement du doigt.

Avantageusement, on peut prévoir que la dimension des orifices dans la direction longitudinale soit plus faible en partie inférieure des orifices, afin de permettre un maintien du doigt en position verrouillée en limitant le jeu.

Il peut également être prévu un flasque solidaire de l'assise et pourvu d'au moins un orifice, le doigt étant engagé également dans cet orifice dans la position de verrouillage.

Avantageusement, le siège comporte un organe de commande manuelle des moyens de verrouillage, et des moyens élastiques sollicitant cet organe de commande vers une position de verrouillage des moyens de verrouillage.

Le dispositif de guidage peut en outre comprendre une pièce en U ménagée sur l'assise, apte à recevoir une nervure longitudinale ménagée sur le support. La nervure peut être une pièce distincte de l'assise et fixée sur celle-ci (ou sur une base solidaire de l'assise). En variante, la nervure et l'assise (ou une base solidaire de l'assise) peuvent former une même pièce emboutie.

De préférence, le siège comprend deux supports latéraux présentant des surfaces de guidage sensiblement identiques.

On décrit à présent, à titre d'exemple non limitatif, un mode de réalisation possible de l'invention, en référence aux figures annexées :
La figure 1 représente le siège selon l'invention, vu en coupe selon un plan longitudinal vertical médian ;
La figure 2 est une vue latérale, depuis l'extérieur, du support monté sur le châssis et de la base de l'assise ;
La figure 3 est similaire à la figure 2, en vue en perspective depuis l'intérieur ;
La figure 4 illustre schématiquement les deux positions extrêmes du siège et une position intermédiaire ;
La figure 5 illustre schématiquement et en superposition trois personnes de morphologies différentes dans la gamme habituelle des morphologies ;
Les figures 6, 7 et 8 montrent les personnes de la figure 5 installées sur le siège selon l'invention, celui-ci occupant respectivement l'une des trois positions de la figure 4 ;
Les figures 9 à 13 illustrent schématiquement différentes formes possibles de la portion avant et de la portion arrière de la surface de guidage, les figures 9, 12 et 13 ne faisant pas partie de l'invention ;
La figure 14 est une vue en perspective des deux supports montrant les moyens de verrouillage ; et
La figure 15 est une vue agrandie de la figure 14, montrant les doigts de verrouillage en position verrouillée.

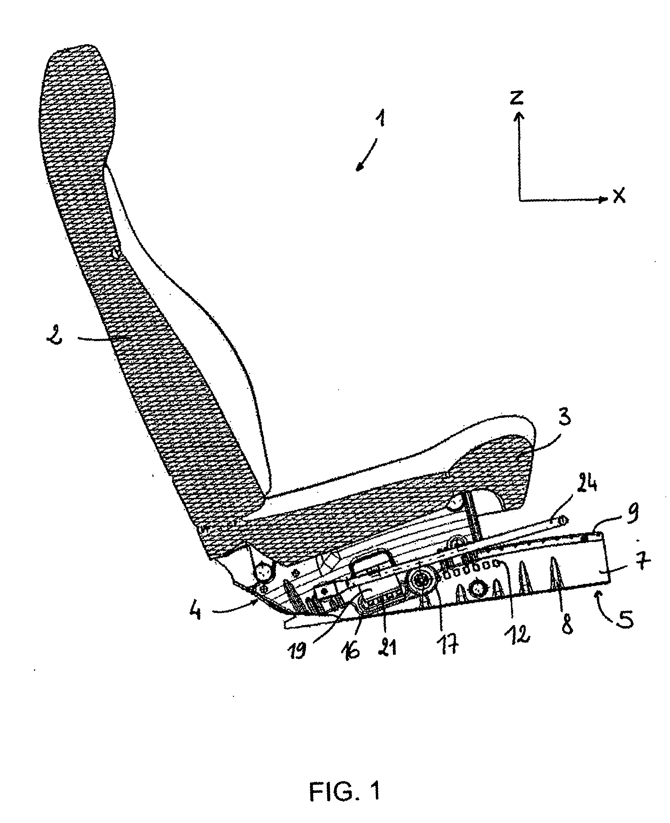

Comme illustré sur la figure 1, un siège 1 de véhicule automobile comprend un dossier 2 et une assise 3 pourvue d'une base 4. Le dossier 2 et l'assise 3 sont ici fixes l'un par rapport à l'autre, c'est-à-dire, en particulier, que le dossier 2 possède une position angulaire fixe par rapport à l'assise 3.

Par convention, la présente description est faite par rapport à un référentiel XYZ lié au véhicule présentant une direction longitudinale X par rapport à laquelle sont notamment utilisés les termes « longueur », « avant », « arrière », une direction transversale Y par rapport à laquelle sont notamment utilisés les termes « largeur », « latéral », « transversal » et une direction verticale Z, par rapport à laquelle sont notamment utilisés les termes « supérieur », « inférieur », « hauteur » . De plus, le terme « intérieur » correspond à l'espace situé entre les deux plans longitudinaux verticaux délimitant latéralement le siège, par opposition au terme « extérieur ». Il est également précisé que les pièces du siège qui se retrouvent symétriquement de chaque côté du siège portent les mêmes numéros de référence.

Le siège 1 comprend deux supports 5 qui sont destinés à être fixés au châssis du véhicule, au niveau des.extrémités latérales du siège 1.

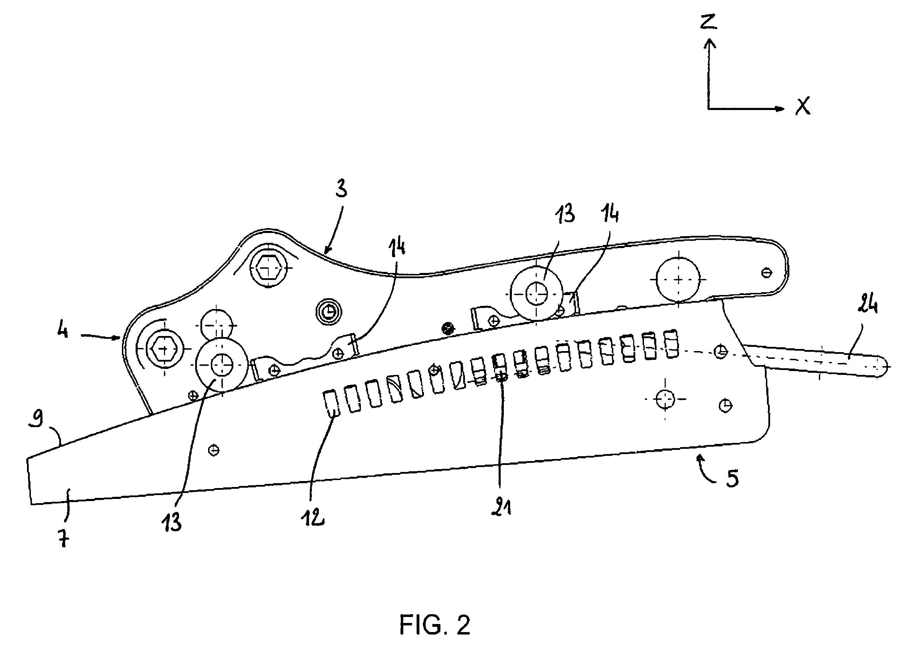

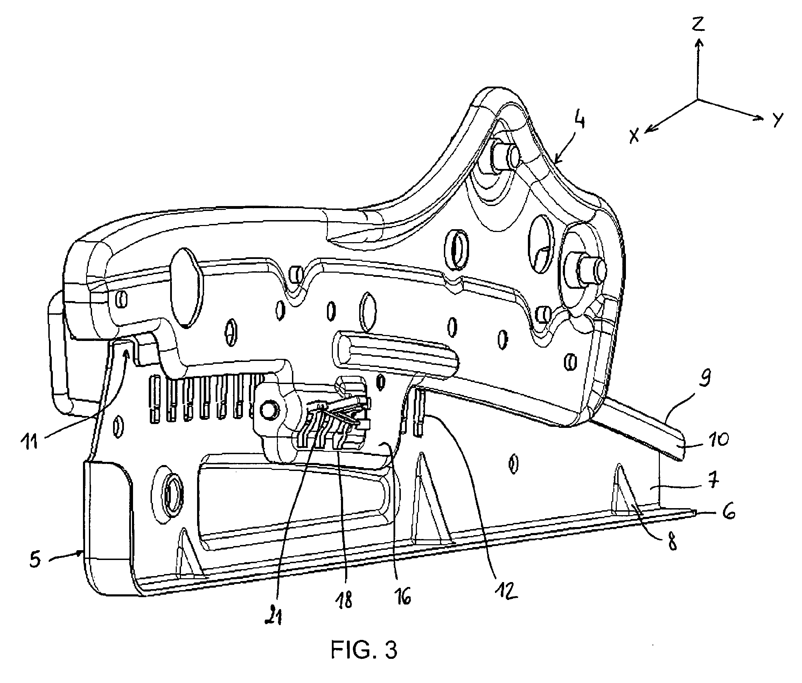

Comme on le voit plus particulièrement sur les figures 2 et 3, le support 5 est une pièce de préférence monobloc qui comprend tout d'abord une plaque 6 sensiblement plane qui sera fixée au châssis, par exemple par boulonnage, et qui, en position montée, est globalement horizontale avec une légère inclinaison ascendante de l'arrière vers l'avant, et située à l'intérieur du siège. Le support 5 comprend également un flasque 7 sensiblement vertical et perpendiculaire à la plaque 6. Des nervures de renfort 8 peuvent être prévues entre le flasque 7 et la plaque 6.
- Le rebord supérieur 9 du flasque 7 est orienté longitudinalement, et possède une forme curviligne, globalement ascendante de l'arrière vers l'avant.
Ce rebord supérieur forme une surface de guidage comme on le verra plus loin. Le flasque 7 comprend enfin un retour faisant saillie vers le bas depuis le bord intérieur du rebord supérieur 9. Ce retour forme une nervure longitudinale 10 et une gorge 11 entre la nervure 10 et la partie principale du flasque 7.

Enfin, une pluralité d'orifices 12 est ménagée dans le flasque 7, ces orifices 12 étant situés sur une courbe sensiblement parallèle au rebord supérieur 9 comme on le voit sur la figure 2.

Sur la base 4 de l'assise 3 sont montés, de chaque côté du siège 1, deux galets 13, d'axe transversal, aptes à rouler sur le rebord supérieur 9 du support 5 correspondant. En outre, la base 4 comporte des pièces en U 14, tournées vers l'extérieur et ouvertes vers le haut, qui sont engagées sur la nervure 10 du support 5 correspondant et dans la gorge 11, afin de guider le déplacement de l'assise 3 par rapport au support 5.

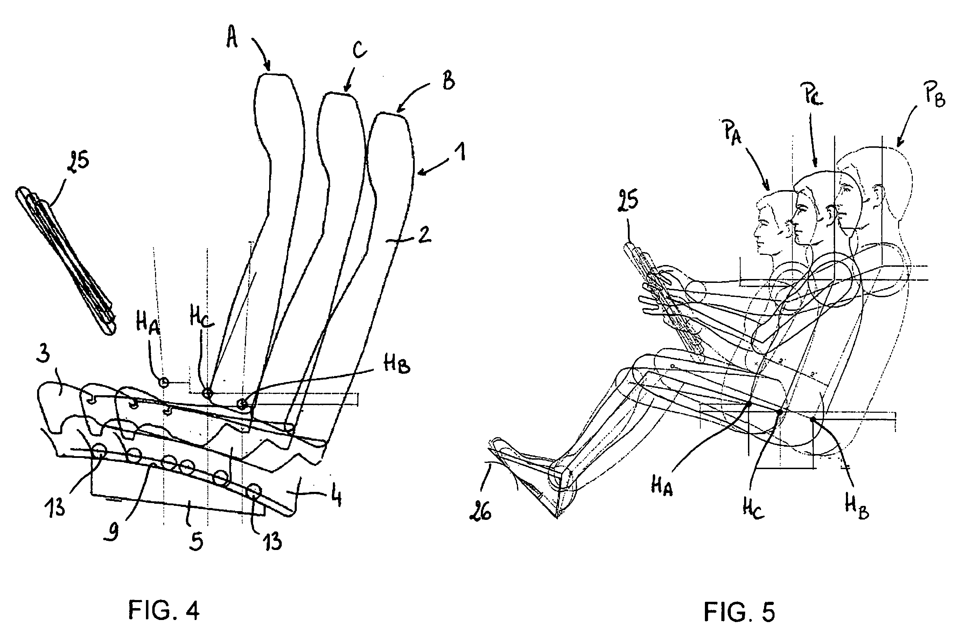

Ainsi, comme illustré sur la figure 4, le siège 1 peut être déplacé par rapport au support 5, par roulement des galets 13 sur le rebord supérieur 9, et en étant guidé, notamment par les pièces en U 14, entre une position extrême avant haute A et une position extrême arrière basse B. Le siège 1 peut également occuper un certain nombre de positions intermédiaires, et notamment une position dite « médiane » C.

Au moins une patte ménagée sur la base 4, du côté extérieur, forme un appui d'une part sur le rebord supérieur 9 et d'autre part contre la face extérieure du flasque 7, afin de maintenir en position l'assise 3 lors du déplacement du siège 1 le long du support 5. Cette patte permet également la transmission des efforts verticaux.

Par ailleurs, la base 4 de l'assise 3 comporte un flasque 16 sensiblement parallèle au flasque 7 du support 5, et situé du côté intérieur, à proximité du support 5. Entre les deux flasques 7, 16 situés d'un même côté du siège 1 est logé un galet 17 d'axe transversal, permettant de récupérer le jeu. De plus le flasque 16 comporte plusieurs orifices 18 qui viennent en correspondance de certains des orifices 12 ménagés sur le support 5, selon la position relative du siège 1 et du support 5.

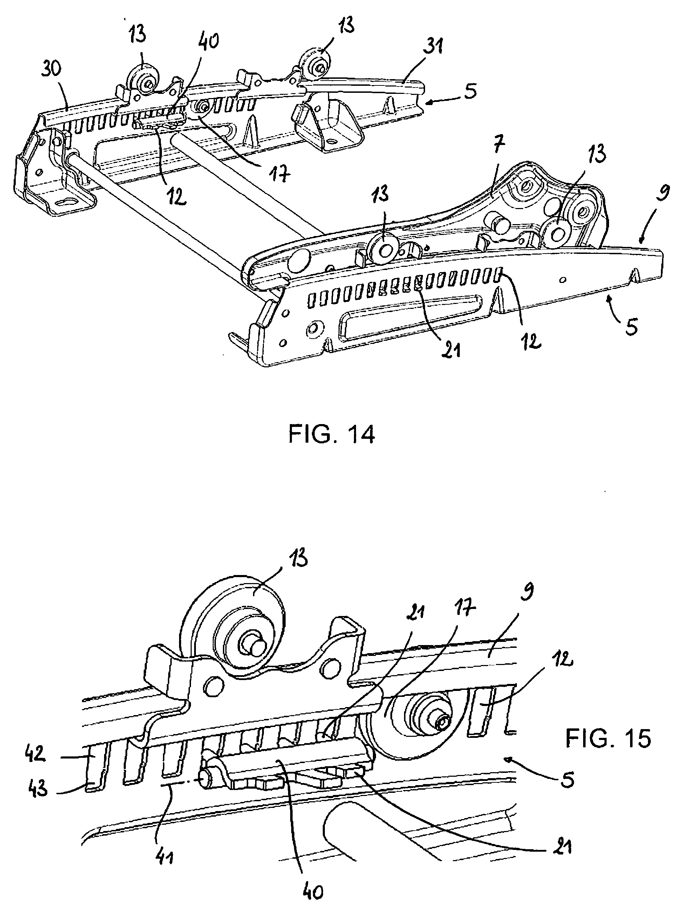

Une pièce mobile 40 est montée pivotante autour d'un axe 41 sensiblement longitudinal solidaire de la base 4 (voir figures 14 et 15). Cette pièce mobile 40, située du côté intérieur du flasque 16 de l'assise 3, comporte plusieurs doigts 21, et de préférence un nombre de doigts 21 identique au nombre d'orifices 18 ménagés dans le flasque 16, par exemple trois ou quatre dans la réalisation représentée.

Un ressort agit sur une plaquette solidaire de la pièce mobile 40 pour maintenir celle-ci dans une position où les doigts 21 sont orientés sensiblement transversalement vers l'extérieur. Dans cette position, les doigts 21 sont engagés à la fois dans les orifices 18 du flasque 16 de l'assise et dans les orifices 12 du flasque 7 du support 5, verrouillant ainsi la position relative du siège 1 par rapport au support 5. On comprend que le siège 1 peut être verrouillé dans un certain nombre de positions discrètes.

Par action sur un levier de commande 24 situé entre les deux supports 5, l'occupant du siège 1 peut soulever la plaquette à l'encontre de la force exercée par le ressort et ainsi déplacer les doigts 21 pour les dégager hors des orifices 18, 12. On est alors en position déverrouillée, et le siège 1 peut à nouveau être déplacé par rapport au support 5.

On se reporte à présent aux figures 4 à 8.

Le figure 4 montre les positions extrêmes avant A et arrière B que peut occuper le siège 1, c'est-à-dire respectivement quand le galet 13 avant est à proximité de l'extrémité avant du rebord supérieur 9 du support 5, et quand le galet 13 arrière est à proximité de l'extrémité arrière de ce rebord supérieur 9. Est également représentée la position médiane C du siège 1, qui sera définie plus loin.

Comme on le voit nettement sur la figure 4, le déplacement du siège 1 depuis la position extrême arrière basse B vers la position extrême avant haute A a pour effet de faire avancer l'assise 3, de relever l'assise 3 et de faire pivoter le dossier 2 en le redressant vers la verticale.

Par exemple, en référence à la figure 4, l'angle de l'assiette peut évoluer de 3,6° en sens horaire (position extrême arrière B) à 4,4° en sens anti-horaire (position extrême avant A), soit 8° de variation.

Sur la figure 5 sont illustrées, en superposition, trois personnes de morphologies différentes, à savoir :
- une personne PA de petite taille, correspondant au 5^{ème} percentile ;
- une personne PB de grande taille, correspondant au 95^{éme} percentile ;
- et une personne PC de taille moyenne, correspondant au 50^{ème} percentile.

Sont également représentés les points H (HA, HB, HC) de ces trois personnes (PA, PB, PC), le point H étant le point de hanche, c'est-à-dire le centre de pivotement entre le torse et des cuisses.

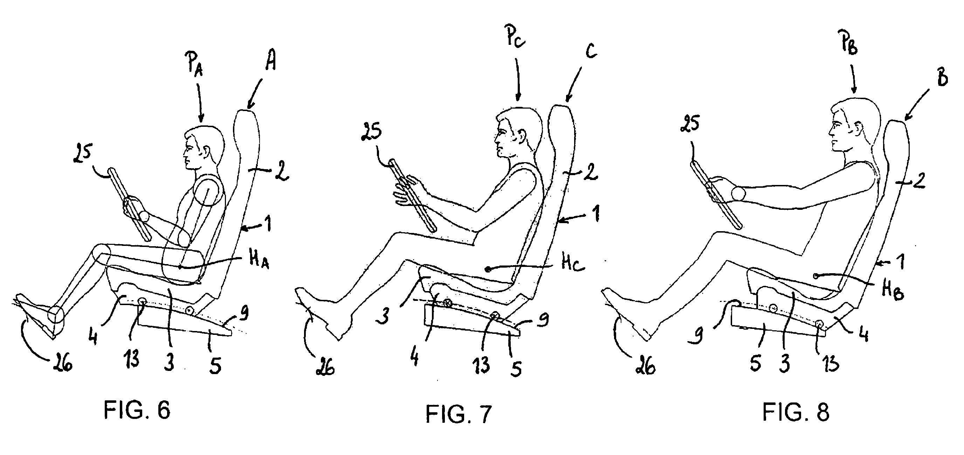

Sur les figures 6 à 8 sont représentées différentes positions du siège 1, en fonction de la morphologie de la personne occupant ce siège 1, ici un conducteur.

Dans le cas d'une personne PA de petite taille, le siège 1 est placé dans sa position A extrême avant haute (figure 6). Ainsi, le conducteur est situé en avant, en hauteur, avec un dossier relevé.

Dans le cas d'une personne PB de grande taille, le siège 1 est placé dans sa position B extrême arrière basse (figure 8). Ainsi, le conducteur est situé plus en arrière, plus bas, avec un dossier abaissé.

Enfin, dans le cas d'une personne PC de taille moyenne, le siège 1 est placé dans sa position médiane C, définie en fonction des proportions typiques d'une personne correspondant au 50^{ème} percentile.

Ainsi, grâce à l'invention, on peut adapter la position du siège 1 en fonction de la morphologie du conducteur (et ce pour environ 90% des morphologies), pour que son point H soit placé de façon la plus satisfaisante possible par rapport au volant 25 et aux pédales 26. Plus généralement, le siège 1 est adaptable à la morphologie de son occupant, y compris un passager, pour que ce dernier soit installé le plus confortablement possible, et le cas échéant de façon satisfaisante par rapport à différents organes du véhicule (volant, pédales, etc.).

Il est à noter que le déplacement du siège entre ses différentes positions, y compris le relèvement de l'assise, et son blocage dans la position souhaitée, sont obtenus avec une structure simple, comportant notamment peu d'organes mobiles. En particulier, ni le dossier ni l'assise ne sont pivotants autour d'un axe fixe par rapport au châssis. Ainsi, l'invention fournit un siège robuste, facile et rapide à monter, et très simple à manoeuvrer pour l'occupant du siège.

Afin d'améliorer le positionnement d'une personne de grande taille, l'invention prévoit une géométrie particulière de la surface de guidage 9.

La surface de guidage 9 comporte une portion avant 30 sur laquelle sont aptes à se déplacer les galets avant sur l'ensemble de leur course, et une portion arrière 31 sur laquelle sont aptes à se déplacer les galets arrière sur l'ensemble de leur course. En d'autres termes, le galet avant n'est pas amené à rouler sur la portion arrière 31 et le galet arrière n'est pas amené à rouler sur la portion avant 30. Par exemple, les portions 30, 31 s'étendent chacune sur environ la moitié de la longueur totale de la surface de guidage 9, selon la direction longitudinale.

Selon l'invention, la portion arrière 31 de la surface de guidage 9 est située au-dessus du prolongement théorique, vers l'arrière, de la courbe constituant la portion avant 30.

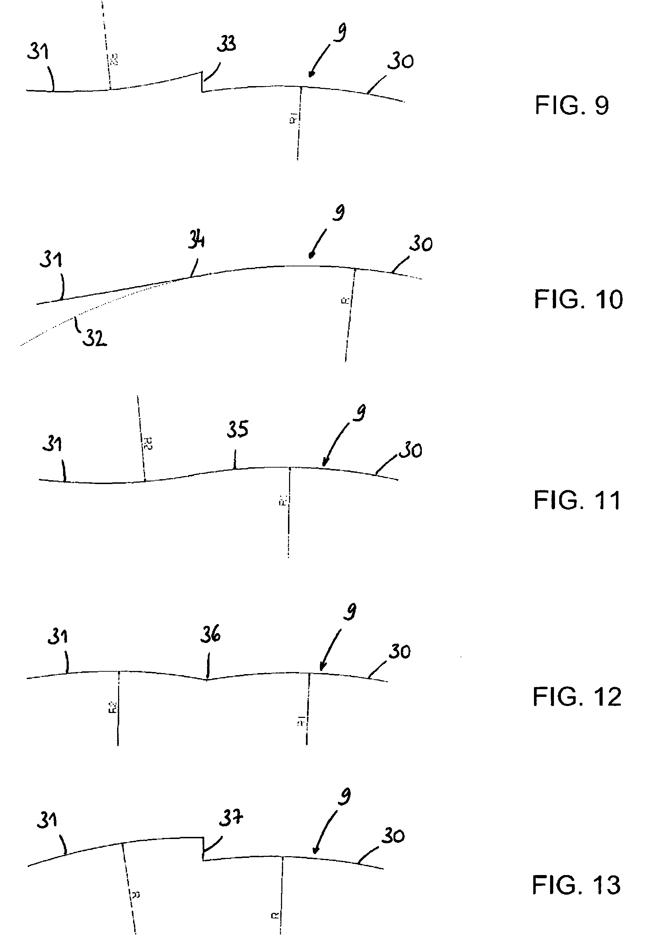

Ainsi, par exemple, si la portion avant 31 est une portion de cercle de rayon R1, ledit prolongement théorique 32 est également une portion de cercle de rayon R1 (voir figure 10), et de même centre que la portion avant 30. La portion arrière 31 peut présenter différentes formes, mais se situe plus haut - selon une direction verticale - que ce prolongement théorique 32. Ainsi, le galet arrière roule sur une surface située plus haut qu'avec les systèmes de l'art antérieur. Ceci a pour conséquence que, lorsque le siège 1 est en position arrière, le dossier 2 est moins incliné et le conducteur est installé de façon plus appropriée.

Différents modes de réalisation possibles de la surface de guidage 9 sont illustrés sur les figures 9 à 13.

Sur la figure 9 qui ne fait pas partie de l'invention, la portion avant 30 est une portion de cercle convexe de rayon R1 et la portion arrière 31 est une portion de cercle concave de rayon R2. De plus, la surface de guidage 9 comporte une portion 33 sensiblement verticale formant une marche descendante entre la portion arrière 31 et la portion avant 30.

Sur la figure 10, la portion avant 30 est une portion de cercle convexe de rayon R et la portion arrière 31 est sensiblement plane et tangente, en un point 34, à la portion avant 30.

Sur la figure 11, la portion avant 30 est une portion de cercle convexe de rayon R1 et la portion arrière 31 est une portion de cercle concave de rayon R2. Les portions avant 30 et arrière 31 sont sensiblement tangentes, de sorte que la surface de guidage 9 présente un point d'inflexion 35.

Sur la figure 12, qui ne fait pas partie de l'invention, la portion avant 30 est une portion de cercle convexe de rayon R1 et la portion arrière 31 est une portion de cercle convexe de rayon R2 > R1. Il existe une rupture de pente au niveau du point 36 de jonction entre les portions avant 30 et arrière 31.

Enfin, sur la figure 13, qui ne fait pas partie de l'invention, la portion avant 30 est une portion de cercle convexe de rayon R et la portion arrière 31 est une portion de cercle convexe de même rayon R. De plus, la surface de guidage 9 comporte une portion 37 sensiblement verticale formant une marche descendante entre la portion arrière 31 et la portion avant 30.

En variante, les portions avant 30 et/ou arrière 31 de la surface de guidage 9 peuvent ne pas être exactement des portions de cercle de rayon R, R1 ou R2, mais présenter sensiblement la forme d'une portion de cercle ayant un rayon moyen R, R1 ou R2.

On se rapporte à présent aux figures 14 et 15 plus précisément les moyens de verrouillage.

Dans cette réalisation, l'organe pivotant 40 est monté sur l'assise 3, cet organe 40 pouvant pivoter autour de l'axe 41 sensiblement longitudinal. L'organe 40 est de forme générale cylindrique et porte des doigts 21 s'étendant radialement. On a un premier ensemble de doigts 21 s'étendant dans le même sens et un deuxième ensemble de doigts s'étendant dans le sens opposé, tous les doigts 21 étant situés sensiblement dans un même plan médian de l'organe pivotant 40.

Les orifices 12 ménagés dans le support 5 présentent une forme allongée dans la direction verticale. De plus, leur dimension selon la direction longitudinale est plus faible en partie inférieure.

En position déverrouillée, les doigts 21 sont situés verticalement. Un utilisateur, par l'intermédiaire d'un organe de commande approprié, peut faire pivoter l'organe 40 autour de l'axe 41, d'environ 90°, les doigts 21 se rapprochant du support 5 correspondant. Au cours de ce mouvement, les doigts 21 s'engagent dans la partie supérieure 42 des orifices 12, dont la dimension dans la direction longitudinale est suffisamment importante pour autoriser le pivotement des doigts 21 avec une certaine tolérance. En fin de rotation, les doigts 21 sont situés sensiblement à l'horizontale et logés dans la partie inférieure 43 des orifices 12. La dimension - dans la direction longitudinale - de cette partie inférieure 43 des orifices 12 est réduite et correspond sensiblement à la largeur des doigts 21. Ainsi, les doigts 21 sont bien maintenus dans les orifices 12 avec un jeu réduit, ce qui assure un verrouillage et un maintien satisfaisants du siège 1.

## Revendications

1. Siège pour véhicule automobile, comprenant une assise (3), un dossier (2) et un dispositif de guidage de l'assise (3) entre une position extrême avant (A) et une position extrême arrière (B), le dispositif de guidage comprenant, en position assemblée :
- au moins un support (5) destiné à être fixé au châssis du véhicule, présentant une surface de guidage (9) orientée longitudinalement et tournée vers le haut, ladite surface de guidage (9) étant curviligne et globalement ascendante de l'arrière vers l'avant ;
- des moyens de déplacement (13) avant et arrière montés sur l'assise (3), aptes à coopérer avec ladite surface de guidage (9) pour permettre le déplacement du siège (1) entre ses deux positions extrêmes (A, B) ;
ladite surface de guidage (9) possédant une portion avant sur laquelle sont aptes à se déplacer les moyens de déplacement avant sur l'ensemble de leur course, et une portion arrière sur laquelle sont aptes à se déplacer les moyens de déplacement arrière sur l'ensemble de leur course, la portion arrière (31) et la portion avant (30) de la surface de guidage (9) étant sensiblement tangentes;
**caractérisé en ce que**, en position montée, la portion arrière de la surface de guidage est située au-dessus du prolongement théorique, vers l'arrière, de la courbe constituant la portion avant.

2. Siège selon la revendication 1, **caractérisé en ce que** le dossier (2) possède une position angulaire fixe par rapport à l'assise (3).

3. Siège selon la revendication 1 ou 2, **caractérisé en ce que** la portion avant de la surface de guidage (9) présente sensiblement la forme d'une portion de cercle convexe, de rayon moyen R1.

4. Siège selon l'une des revendications 1 à 3, **caractérisé en ce que** la portion arrière (31) de la surface de guidage (9) présente sensiblement la forme d'une portion de cercle de rayon moyen R2.

5. Siège selon la revendication 4, **caractérisé en ce que** la portion arrière (31) de la surface de guidage (9) est convexe et **en ce que** R2 > R1.

6. Siège selon l'une des revendications 1 à 4, **caractérisé en ce que** la portion arrière (31) de la surface de guidage (9) est concave, la portion arrière (31) et la portion avant (30) étant sensiblement tangentes.

7. Siège selon 1 à 3, **caractérisé en ce que** la portion arrière (31) de la surface de guidage (9) est sensiblement plane et tangente à la portion avant (30) de la surface de guidage (9).

8. Siège selon l'une des revendications 1 à 7, **caractérisé en ce qu'**il comprend des moyens de verrouillage de l'assise sur le support (5), les moyens de verrouillage comprenant d'une part une pluralité d'orifices (12) ménagés dans le support (5), en différentes positions longitudinales, et d'autre part au moins un doigt (21) monté sur l'assise (3), pouvant occuper une position de verrouillage dans laquelle il est engagé dans l'un des orifices (12) du support (5), et pouvant être déplacé vers une position de déverrouillage.

9. Siège selon la revendication 8, **caractérisé en ce que** le ou les doigts (21) font saillie d'un organe pivotant (40) qui est monté sur l'assise (3) et possède un axe de pivotement (41) sensiblement longitudinal, le doigt (21) s'étendant sensiblement perpendiculairement à l'axe de pivotement (41), l'organe (40) étant apte à pivoter entre une position déverrouillée dans laquelle le doigt (21) est sensiblement vertical et, après une rotation d'environ 90° en direction du support (5), une position verrouillée, dans laquelle le doigt (21) est sensiblement horizontal et engagé dans un orifice (12), les orifices présentant une forme allongée dans la direction verticale pour permettre le pivotement du doigt (21).

10. Siège selon la revendication 8 ou 9, **caractérisé en ce qu'**il comporte un flasque (16) solidaire de l'assise (3) et pourvu d'au moins un orifice (18), le doigt (21) étant engagé également dans cet orifice (18) dans la position de verrouillage.

11. Siège selon l'une des revendications 1 à 10, **caractérisé en ce que** le dispositif de guidage comprend en outre une pièce en U (14) ménagée sur l'assise (3), apte à recevoir une nervure longitudinale (10) ménagée sur le support (5).

## Claims

1. A seat for an automotive vehicle, comprising a seating surface (3), a backrest (2) and a device for guiding the seating surface (3) between an extreme front position (A) and an extreme rear position (B), the guiding device comprising, in the assembled position:
- at least one support (5) intended to be attached to the chassis of the vehicle, having a guiding surface (9) oriented longitudinally and turned upwards, said guiding surface (9) being curvilinear and globally ascending from the rear to the front;
- front and rear displacement means (13) mounted on the seating surface (3), able to cooperate with said guiding surface (9) in order to allow displacement of the seat (1) between its two extreme positions (A, B);
said guiding surface (9) having a front portion on which the front displacement means are movable over the whole of their travel, and a rear portion on the which the rear displacement means are movable over the whole of their travel, the rear portion (31) and the front portion (30) of the guiding surface (9) being substantially tangent;
**characterized in that**, in the mounted position, the rear portion of the guiding surface is located above the theoretical extension, rearwards, of the curve forming the front portion.

2. The seat according to claim 1, **characterized in that** the backrest (2) has a set angular position relatively to the seating surface (3).

3. The seat according to claim 1 or 2, **characterized in that** the front portion of the guiding surface (3) substantially has the shape of a convex circular portion of average radius R1.

4. The seat according to one of claims 1 to 3, **characterized in that** the rear portion (31) of the guiding surface (9) substantially has the shape of a circular portion of average radius R2.

5. The seat according to claim 4, **characterized in that** the rear portion (31) of the guiding surface (9) is convex and **in that** R2 > R1.

6. The seat according to one of claims 1 to 4, **characterized in that** the rear portion (31) of the guiding surface (9) is concave, the rear portion (31) and the front portion (30) being substantially tangent.

7. The seat according to claims 1 to 3, **characterized in that** the rear portion (31) of the guiding surface (9) is substantially planar and tangent to the front portion (30) of the guiding surface (9).

8. The seat according to one of claims 1 to 7, **characterized in that** it comprises means for locking the seating surface on the support (5), the locking means comprising a plurality of orifices (12) made in the support (5), in different longitudinal positions on the one hand, and at least one finger (21) mounted on the seating surface (3) which may occupy a locking position in which it is engaged into one of the orifices (12) of the support (5), and which may be moved towards an unlocking position.

9. The seat according to claim 8, **characterized in that** the finger(s) (21) protrude(s) from a pivoting member (40) which is mounted on the seating surface (3) and has a substantially longitudinal pivot axis (41), the finger (21) extending substantially perpendicularly to the pivot axis (41), the member (40) being able to pivot between an unlocked position in which the finger (21) is substantially vertical and, after a rotation of about 90° in direction of the support (5), and a locked position in which the finger (21) is substantially horizontal and engaged into an orifice (12), the orifices having an elongated shape in the vertical direction so as to allow pivoting of the finger (21).

10. The seat according to claim 8 or 9, **characterized in that** it includes a flange (16) integral with the seating surface (3) and provided with at least one orifice (18), the finger (21) being also engaged into this orifice (18) in the locking position.

11. The seat according to one of claims 1 to 10, **characterized in that** the guiding device further comprises a U-shaped part (14) arranged on the seating surface (3), capable of receiving a longitudinal rib (10) arranged on the support (5).

## Patentansprüche

1. Sitz für Kraftfahrzeug, der eine Sitzfläche (3), eine Rückenlehne (2) und eine Führungsvorrichtung der Sitzfläche (3) zwischen einer extremen vorderen Stellung (A) und einer extremen hinteren Stellung (B) umfasst, wobei die Führungsvorrichtung in montierter Stellung umfasst:
- mindestens eine Auflage (5), die dazu bestimmt ist, am Rahmen des Fahrzeugs befestigt zu sein, die eine länglich ausgerichtete und nach oben gedrehte Führungsfläche (9) aufweist, wobei die Führungsfläche (9) gekrümmt ist und allgemein nach vorn ansteigt,
- an der Sitzfläche (3) montierte vordere und hintere Verschiebungsmittel (13), die imstande sind, mit der Führungsfläche (9) zusammenzuarbeiten, um die Verschiebung des Sitzes (1) zwischen seinen zwei extremen Stellungen (A, B)zu erlauben,
wobei die Führungsfläche (9) einen vorderen Abschnitt besitzt, auf dem die vorderen Verschiebungsmittel imstande sind, sich über ihren gesamten Weg zu verschieben, und einen hinteren Abschnitt, auf dem die hinteren Verschiebungsmittel imstande sind, sich über ihren gesamten Weg zu verschieben, wobei der hintere Abschnitt (31) und der vordere Abschnitt (30) der Führungsfläche (9) etwa berührend sind,
**dadurch gekennzeichnet, dass** sich in montierter Stellung der hintere Abschnitt der Führungsfläche über der theoretischen Verlängerung nach hinten der Kurve befindet, die den vorderen Abschnitt bildet.

2. Sitz nach Anspruch 1, **dadurch gekennzeichnet, dass** die Rückenlehne (2) eine feste Winkelposition im Verhältnis zur Sitzfläche (3) besitzt.

3. Sitz nach Anspruch 1 oder 2, **dadurch gekennzeichnet, dass** der vordere Abschnitt der Führungsfläche (9) etwa die Form eines konvexen Kreisabschnitts mit mittleren Radius R1 aufweist.

4. Sitz nach einem der Ansprüche 1 bis 3, **dadurch gekennzeichnet, dass** der hintere Abschnitt (31) der Führungsfläche (9) etwa die Form eines Kreisabschnitts mit mittlerem Radius R2 aufweist.

5. Sitz nach Anspruch 4, **dadurch gekennzeichnet, dass** der hintere Abschnitt (31) der Führungsfläche (9) konvex ist und dass R2 > R1 ist.

6. Sitz nach einem der Ansprüche 1 bis 4, **dadurch gekennzeichnet, dass** der hintere Abschnitt (31) der Führungsfläche (9) konkav ist, wobei der hintere Abschnitt (31) und der vordere Abschnitt (30) etwa berührend sind.

7. Sitz nach 1 bis 3, **dadurch gekennzeichnet, dass** der hintere Abschnitt (31) der Führungsfläche (9) etwa eben und am vorderen Abschnitt (30) der Führungsfläche (9) berührend ist.

8. Sitz nach einem der Ansprüche 1 bis 7, **dadurch gekennzeichnet, dass** er Verriegelungsmittel der Sitzfläche auf der Auflage (5) umfasst, wobei die Verriegelungsmittel einerseits eine Vielzahl von Öffnungen (12) umfassen, die an verschiedenen Längspositionen in die Auflage (5) eingearbeitet sind, und andererseits mindestens einen an der Sitzfläche (3) montierten Finger (21), der eine Verriegelungsstellung einnehmen kann, in der er in eine der Öffnungen (12) der Auflage (5) eingreift, und in eine Entriegelungsstellung verschiebbar ist.

9. Sitz nach Anspruch 8, **dadurch gekennzeichnet, dass** der oder die Finger (21) aus einem Schwenkorgan (40) hervorragen, das an der Sitzfläche (3) montiert ist und eine etwa längliche Schwenkachse (41) besitzt, wobei sich der Finger (21) etwa senkrecht zu der Schwenkachse (41) erstreckt, wobei das Organ (40) imstande ist, zwischen einer entriegelten Stellung, in der der Finger (21) etwa vertikal ist, und, nach einer Drehung von zirka 90° in Richtung der Auflage (5), einer verriegelten Stellung, in der der Finger (21) etwa horizontal ist und in eine Öffnung (12) eingreift, zu schwenken, wobei die Öffnungen eine längliche Form in der vertikalen Richtung aufweisen, um das Schwenken des Fingers (21) zu erlauben.

10. Sitz nach Anspruch 8 oder 9, **dadurch gekennzeichnet, dass** er eine Wange (16) aufweist, die mit der Sitzfläche (3) verbunden ist und mit mindestens einer Öffnung (18) ausgestattet ist, wobei der Finger (21) in der Verriegelungsstellung ebenfalls in diese Öffnung (18) eingreift.

11. Sitz nach einem der Ansprüche 1 bis 10, **dadurch gekennzeichnet, dass** die Führungsvorrichtung weiterhin ein U-förmiges Teil (14) umfasst, das an der Sitzfläche (3) ausgebildet ist und imstande, eine Längsrippe (10) aufzunehmen, die an der Auflage (5) ausgebildet ist.
